# EUROPEAN PATENT APPLICATION

(11) **EP 3 486 065 A1**
(43) Date of publication of application: **22.05.2019**
(21) Application number: 17201946.5
(22) Date of filing: 15.11.2017
(51) Int. Cl.: B29C 45/27, B29C 45/00, B29L 31/22

(54) **FASTENING ELEMENT WITH A FILM HINGE AND METHOD OF MANUFACTURING THE SAME**

(71) Applicant: Newfrey LLC, New Britain, CT 06053 (US)
(72) Inventor: Gerlach, Wolfgang, 35394 Gießen (DE); Ducornait, Pierre-Yves, 35394 Gießen (DE); Jeide, Jens, 35394 Gießen (DE); Kaldasch, Werner, 35394 Gießen (DE); Bernath, Ewald, 35394 Gießen (DE); Weinecker, Stefan, 35394 Gießen (DE)
(74) Representative: SBD IPAdmin

(57) **Abstract**

Method of making a fastening element (10) and fastening element (10) comprising a first portion (12), a second portion (14) and a film hinge (16) provided between the first and second portions (12, 14) and connecting the first and second portion (12, 14). The film hinge (16) is adapted to be bent and comprises a first structure (18) extending in a first direction (X1), a second structure (20) extending in a second direction (X2) and a third structure (22) provided between the first structure and the second structure. The third structure (22) comprises an interface part (24) extending between the first and second structure (18, 20) and a bulge (26) protruding from the interface part (24), in order to allow an injection moulding of the fastening element (10) through the third structure (22).

## Description

The present invention relates to fastening elements comprising a film hinge provided between two portions and adapted to be bent, and to a method of making such fastening elements.

Film hinges are well known in the plastic industry and are extensively used for the relative folding of two parts without using any further element such as bolts or eyelets. A film hinge allows for example a permanent flexible binding of a main part with a subsequent part, such as a cover. In particular film hinges are used in fastening elements.

Document EP2160801 A1 discloses a holding arrangement with a fastening element (or holding device) for at least two electrical connection elements, such as cable lugs. The fastening element comprises a base part and a cover part. The cover part is designed to be integral with the base part via a film hinge. The base part and the cover part each have an approximately circular outer circumference. The cover part can be folded onto the base part around an axis of the film hinge which is arranged tangentially with respect to the outer circumference of the base part. In the holding arrangement disclosed in EP2160801A1, the two electrical connection elements each have an electrical connection section and a line section. The connection sections are inserted axially one on top of the other in the fastening element and are fixed axially. The line sections extend in the radial direction from radial openings of the fastening element. The radial openings is designed in such a way that the connection sections cannot be withdrawn from the radial openings. In addition an axial opening is formed on the base part and/or the cover part, via which axial opening electrical contact can be made with at least one connection section of the inserted connection sections. In the closed state, the base part and the cover part form a fastening element, in which the inserted cable lugs are held securely.

The film hinge allows the cover part to be folded onto the base part. Hence, the base part and the cover parts are not separate parts, optimizing the assembly and decreasing the risk of loss of parts. However, the bending load at the kink point is very important. Moreover, once in the closed state, there might be a need to re-open and close several time the base part and the cover part. The film hinge has to be robust enough to allow it without losing sufficient flexibility or being damaged.

The fastening elements are in particular injection-molded. The base part, the cover part and the film hinge are manufactured in an injection molding operation that creates the three parts at one time as a single piece. During an injection molding operation, an injection channel drives a melt flow to a mold chamber through a gate. The general rule for a correct injection molding is to maintain a uniform wall thickness, as disclosed in the publications of *EP Kunstofftechnik GmbH* available under http://epkunststofftechnik.de/kunststoffe. Such uniform wall thickness is not possible with a film hinge.

A standard injection molding process for such elements consists in having a gate opening at one end of the chamber, said end being adapted to form the first part. The melt flows from the gate inside the chamber and through a restricted section of the chamber and until the other end of the chamber adapted to form the second part. The restricted section is adapted to form the film hinge. With one gate provided at one end of the chamber, the restriction for the film hinge creates a pressure drop. Pressure sensors may be provided in order to ensure that the fastening element was correctly injected and filled or complete. In particular a sufficient pressure must be ensured in order to avoid cavities, sinks,...

The publication of John Philip Beaumont "*Auslegung von Anguss und Angusskanal Spritzgießwerkzeuge erfolgreich einsetzen*" is directed to the injection molding of a film hinge and the possible position of the gates to manufacture such elements with film hinge. In this publication, it is stated that an injection gate in the vicinity of the hinge should be avoided, since it leads to a premature failure of the film hinge.

For overcoming the differential pressure, one known technique is to provide two gates, on both sides of the hinge (in other word to provide one gate at both end of the chamber). However, if melt reaches the hinge in some locations before others, it stops flowing and starts to cool. This results in molded-in stress in the hinge. The hinge may become a weak point and breakage risks occur. Forcing the melt to flow through the hinge requires high injection pressure and speed. Molds must be built strong enough to withstand these pressures. Besides, machines with higher clamping forces are needed.

Cooling channels may be provided for rapid cooling in order to reduce crystallinity in the hinge and produces a longer-lasting living hinge.

The use two gates, with the melt flowing towards the middle where the film hinge is located will reduce the possibility of sink but may give rise to a faulty hinge and the possibility of cracking.

It is hence an object of the present invention to at least alleviate the aforementioned shortcomings.

Accordingly the present invention provides a fastening element comprising a first portion, a second portion and a film hinge provided between the first and second portions and connecting the first and second portion, the film hinge being adapted to be bent, wherein the film hinge comprises a first structure extending in a first direction, a second structure extending in a second direction and a third structure provided between the first structure and the second structure characterized in that the third structure comprises an interface part extending between the first and second structure and a bulge protruding from the interface part, in order to allow an injection moulding of the fastening element through the third structure.

As described above, several ways of manufacturing an elements having a film hinge are known. Applicant has overcome the prejudices of the skilled person, who was always avoiding to first inject the melt in the vicinity of the film hinge, and did modify the classic structure of the film hinge in order to allow an injection moulding of the fastening element through the third structure (or through the film hinge). The fastening element according to the invention can be manufactured through a safe process, securing the correct injection of the film hinge and the complete filing. The kink point (or bending point) of the film hinge is subject to a decreased load with regard to the film hinge of the prior art. The bending point of the film hinge can be translated and must not be provided in the middle of the film hinge.

In an embodiment, the injection moulding of the fastening element is realized through the bulge. The bulge allows a local cross-section increase of the film hinge. A thickening of the bulge is also possible. The thickening and/or the bulge (or bulge shape) reinforce the area between the first and second structures. As a consequence, the bulge is not stressed during the bending or the closing.

In some embodiment the bulge is provided in the middle of the film hinge and the middle of the film hinge is thus reinforced. The first and second structures comprises a reduced cross section with regard to the third structure.

In an embodiment, the fastening element is adapted to allow an injection moulding of the fastening element through the third structure only.

In an embodiment, the third structure is equidistant from the first and second portions. The first and second structure may have the same length.

In an embodiment, the first and second direction are not parallel to each other. Thus the first and second structure can form an angle. The angle may help directing the bending.

In an embodiment, the third structure comprises a U-shaped or rounded cross-section. The U-shaped (or rounded) cross-section may correspond to the hinge shape in its closed position and also enable to keep the portion free of stress. In another embodiment, the third structure may also have a flat cross-section, extending along an axis.

In an embodiment, the bulge extends perpendicularly to the first and/or to the second section and/or to the interface part.

In an embodiment, the film hinge comprises a first and a second bending area, wherein the bulge extends between the first and the second bending areas. Thus two bending points are provided.

In an embodiment, the first bending area extends between the first structure and the third structure, wherein the second bending area extends between the second structure and the third structure.

In an embodiment, the distance between the bulge and the first portion and/or the second portion along the first direction and/or the second direction is at least 2 millimetre. A compact fastening element may be manufactured without modifying the shape of the film hinge and/or its molding process.

In an embodiment, the bulge protrudes from the interface part with a semi-circular shape.

The present invention is also directed to a method of making a fastening element comprising a film hinge which connects a first portion of the fastening element and a second portion of the fastening element, the film hinge being adapted to be bent, the film hinge comprising a first structure, a second structure and a third structure provided between the first structure and the second structure, the third structure having an interface part and a bulge protruding from the interface part, the method comprising the steps of:
a. Providing a mold with a first part destined to form the first portion of the fastening element, a second part destined to form the second portion of the fastening element, and a third part extending between the first part and the second part and destined to form the film hinge,
b. Injecting plastic material in the mold through an injection channel having an outlet, which opens into the mould,

Wherein the outlet of the injection channel opens into the third part of the mould, and the plastic material flows from the third part of the mould toward the first and second parts.

Such method avoids any weld line on the fastening elements, and more particularly in the hinge area. Besides the method reduces the needed injection pressure.

In an embodiment, a unique injection channel is provided.

In an embodiment, the third part of the mould comprises a first straight section connected to the first part, a second straight section connected to the second part, wherein the first and second straight sections are connected to each other through a third section, the third section having a U-shaped or rounded cross-section.

In an embodiment, the third section comprises an interface body provided between the first and second straight section, and an injection body, which extend perpendicularly to the interface body, and wherein the outlet of the injection channel (or gate) opens into the injection body.

In an embodiment, the injection body and the interface body both have a U-shaped or rounded cross-section.

In an embodiment, the distance between the injection body and the first part is at least 2 millimetres.

In an embodiment, the interface body runs alongside the first and second straight sections.

Other characteristics and advantages of the invention will readily appear from the following description of embodiments, provided as non-limitative examples, in reference to the accompanying drawings.

In the drawings:
Fig. 1 is a schematic top view of a fastening element according to the invention;
Fig. 2 is a schematic side view of the fastening element of Fig. 1;
Fig. 3 is a first perspective view of a fastening element according to the invention;
Fig. 4 is an embodiment of a fastening element according to the invention in a closed position
Fig. 5. is a schematic view of a mould to manufacture a fastening element according to the invention.
On the different figures, the same reference signs designate identical or similar elements.

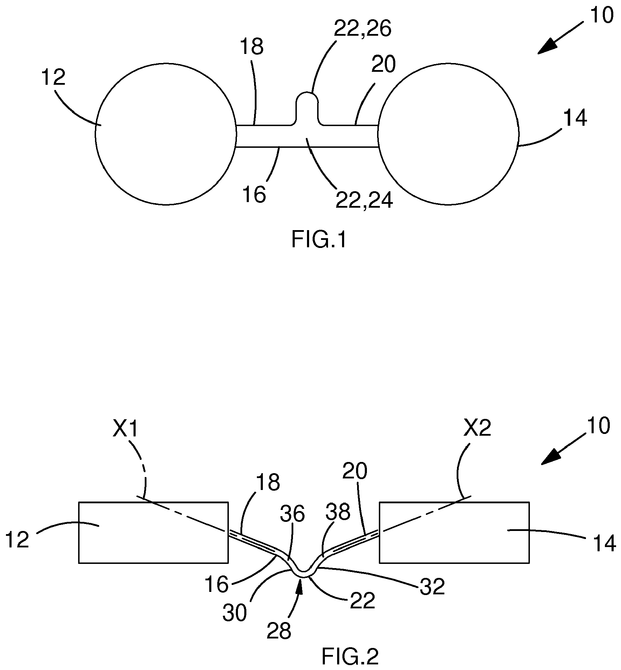

Fig. 1 schematically shows a fastening element 10. The fastening element comprises a first portion 12, a second portion 14 and a film hinge 16 extending between the first portion 12 and the second portion 14. As illustrated in Fig. 1 first and second portions 12, 14 are connected to each other by the film hinge 16 only. First and second parts are integrally connected to another via the film hinge 16.

The fastening element 10 is an injection moulded component. The fastening element 10 is a one-piece component obtained through a manufacturing process consisting of injecting material into a mould.

The film hinge 16 comprises a first structure 18 extending in a first direction X1, a second structure 20 extending in a second direction X2 and an intermediate structure provided between the first structure 18 and the second structure 20 and forming a third structure 22.

The third structure 22 comprises an interface part 24 extending between the first and second structure 18, 20 and a bulge 26 protruding from the interface part 24. For example, the bulge 26 extends perpendicularly to the first and/or to the second section 18, 20 and/or to the interface part 24. The bulge 26 may protrude from the interface part 24 with a semi-circular shape viewed from the top, as illustrated in Fig. 1. In other embodiments other shape of bulge might be considered.

The film hinge, as illustrated in Fig. 2 may have a different thickness. In other words the thicknesses of the first structure 18, second structure 20, interface part 24 and bulge 26 are not the same.

The first and second directions X1, X2 are, as illustrated, not parallel to each other but form an angle. The angle may be between 120 degrees and 180 degrees. In another embodiment (not represented), the first and second directions X1, X2 may extend along a horizontal axis.

The third structure 22 comprises a U-shaped or rounded cross-section. More particularly the bulge 26 and the interface part 24 comprise a U-shaped or V- shaped cross section, as illustrated in Fig. 2. The third structure comprises a bottom 28 from which extends two lateral segments 30, 32.The two lateral segments 30, 32 might extend parallel to each other or form an angle as illustrated in Fig. 2.

The film hinge 16 is adapted to allow an injection moulding of the fastening element 10 through the third structure, and more particularly through the third structure only, without decreasing the bending properties and life time of the film hinge 16.

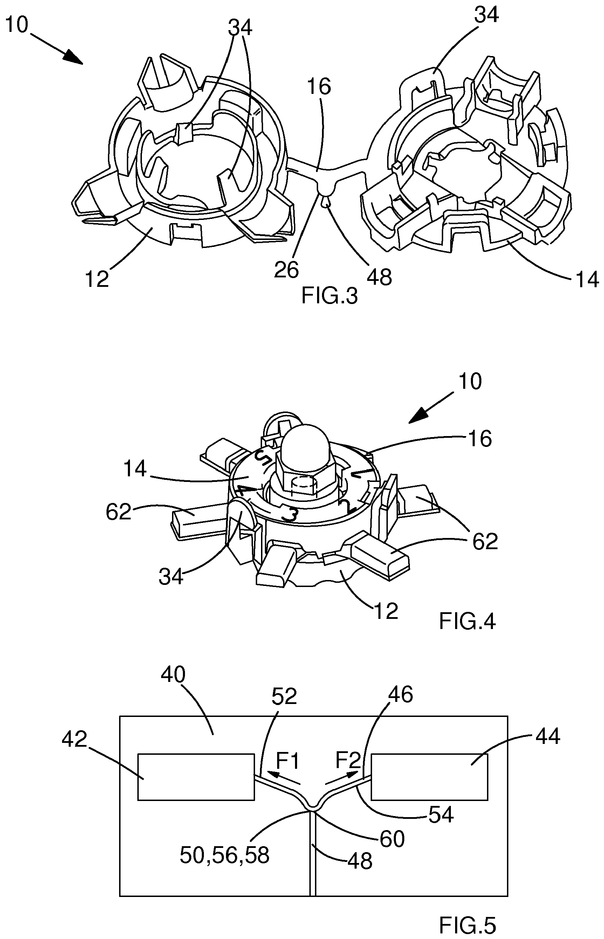

The film hinge 16 is adapted to be bent such that the distance between the first and the second portion are reduced. Fig. 2 shows a folding direction, along which the first portion can be folded onto second portion around an axis of the film hinge 16 which is arranged tangentially with respect to an outer circumference of the first portion. Fig. 4 shows an embodiment of a fastening element in the closed position, in which the film hinge has been bent, such that the second portion 14 covers the first portion 12 or vice versa.

For example, as illustrated in Fig. 3 or Fig. 4, latching projections 34 may be provided on the first and second portions 12, 14 such that latching projections of the first portion 12 engage latching projections of the second portion 14 once the second portion 14 has been folded onto the first portion 12.

In order to allow a reliable bending of the film hinge, said film hinge comprises a first and a second bending area 36, 38. The first bending area 36 extends between the first structure 18 and the third structure 22. The second bending area 38 extends between the second structure 20 and the third structure 22. The bulge 26 and/or the interface part 24 extends between the first and the second bending areas 36, 38. The bending area of the film hinge is thus split in two distinct locations. The bending area of the film hinge may not be provided in the middle of the film hinge 16. The first bending area 36 will be nearer to the first portion 12 than the second bending area 38.

Between the first and second bending area 36, 38 extends the U-shaped or rounded or V-shaped cross-section of the third structure and the radius of the third structure 22 pre-defines the first and second structures in view of the future folding of the film hinge.

The fastening element 10 may be a plastic component, for example a thermoplastic component. The fastening element 10 is an injection moulded part and first portion 12, second portion 14 and film hinge 16 are moulded during a single injection moulded step.

The fastening element 10 is manufactured in a mold 40. Fig. 5 schematically shows a mold for injection molding of the fastening element 10. The mold 40 comprises a first part 42 adapted to form the first portion 12 of the fastening element 10, a second part 44 destined to form the second portion 14 of the fastening element 10, and a third part 46 extending between the first part 42 and the second part 44 and destined to form the film hinge 16.

A molten material, for example a molten plastic material is injected in the mold 40 through an injection channel or a gate 48. The injection channel or the gate 48 comprises an end 50 (or outlet) which opens into the third part 46 of the mould 40. The molten material flows then from the third part 46 of the mould 40 toward the first and second parts 42, 44, as represented by the arrows F1 and F2 in Fig. 5.

The gate or injection channel 48 opening in the mold 40 is unique. In other words, there are no other injection channel apart from the one opening into the third part 46 of the mould 40.

The injection channel 48 may extend orthogonal to a plan formed by the injection body as illustrated in Fig. 5.

The third part 40 of the mould comprises a first straight section 52 connected to the first part 42, a second straight section 54 connected to the second part. The first and second straight sections 52, 54 are connected to each other through a third section 56, the third section 56 having a U-shaped or V-shaped cross-section. In other words the third section 56 forms an elbow.

The third section 56 comprises an interface body 58 provided between the first and second straight section, and an injection body 60, which extend perpendicularly to the interface body 58.

The outlet or end 50 of the injection channel 48 opens into the injection body 60 as illustrated in Fig. 5. Thus, the molten material is injected first in the injection body and then flows through the interface body, first and second straight sections 52, 54 to reach the first part 42 and second part 44 of the mold and form the complete fastening element 10. The molten material is thus distributed from the injection body 60 in the rest of the mold 40. The first and second bending areas 36, 38 of the film hinge 16 does thus not correspond to the injection point of the molten material.

The distance between the injection body and the first part is at least 2 millimetres. This implies a distance between the bulge 26 and the first portion 12 and/or the second portion 14 along the first direction X1 and/or the second direction X2 to be at least 2 millimetres, in order to allow a correct injection moulding of the fastening element 10.

As illustrated in Fig. 3 and Fig. 4 the fastening element may serve the purpose of holding one or several cable lugs 62 and the first portion 12 can be a base part, the second portion 14 can be a cover part. However, in others embodiments, the fastening element 10 may have other purposes.

In Fig. 3 the base part (first portion 12) and the cover part (second portion 14) are shown in an open state. The base part and the cover part each have an approximately circular outer circumference and, in the closed state, form a holding device, in which inserted cable lugs 62 are held securely, as illustrated in Fig. 4.

The fastening element 10 can be positioned onto a ground bolt, as illustrated in Fig. 4. The ground bolt can for example be connected or be formed at a on a vehicle chassis, for example, corresponds in terms of its shape to a centering bolt. A nut can be screwed onto the ground bolt, whose underside makes contact with the cable lugs 62.

## Claims

1. Fastening element (10) comprising a first portion (12), a second portion (14) and a film hinge (16) provided between the first and second portions (12, 14) and connecting the first and second portion (12, 14), the film hinge (16) being adapted to be bent, wherein the film hinge (16) comprises a first structure (18) extending in a first direction (X1), a second structure (20) extending in a second direction (X2) and a third structure (22) provided between the first structure and the second structure **characterized in that** the third structure (22) comprises an interface part (24) extending between the first and second structure (18, 20) and a bulge (26) protruding from the interface part (24), in order to allow an injection moulding of the fastening element (10) through the third structure (22).

2. Fastening element (10) according to claim 1, wherein the third structure (22) comprises a U-shaped cross-section.

3. Fastening element (10) according to claim 1 or 2, wherein the bulge (26) extends perpendicularly to the first structure (18) and/or to the second structure (20) and/or to the interface part (24).

4. Fastening element (10) according to any of claims 1 to 3, wherein the film hinge (16) comprises a first and a second bending area (36, 38), wherein the bulge (26) extends between the first and the second bending areas (36, 38).

5. Fastening element (10) according to claim 4, wherein the first bending area (36) extends between the first structure (18) and the third structure (22), wherein the second bending area (38) extends between the second structure (20) and the third structure (22).

6. Fastening element (10) according to any of claims 1 to 4, wherein the distance between the bulge (26) and the first portion (12) and/or the second portion (14) along the first direction and/or the second direction is at least 2 millimetres.

7. Fastening element (10) according to any of claims 1 to 6, wherein the bulge (26) protrudes from the interface part (24) with a semi-circular shape.

8. Fastening element (10) according to any of claims 1 to 7, wherein the third structure (22) is equidistant from the first and second portions (12, 14).

9. Method of making a fastening element (10) comprising a film hinge (16) which connects a first portion (12) of the fastening element and a second portion (14) of the fastening element, the film hinge being adapted to be bent, the film hinge comprising a first structure (18), a second structure (20) and a third structure (22) provided between the first structure and the second structure, the third structure having an interface part (24) and a bulge (26) protruding from the interface part, the method comprising the steps of:
a. Providing a mold (40) with a first part (42) destined to form the first portion (12) of the fastening element, a second part (44) destined to form the second portion (14) of the fastening element, and a third part (46) extending between the first part and the second part and destined to form the film hinge (16),
b. Injecting plastic material in the mold through an injection channel (48) having an outlet, which opens into the mould (40),
wherein the outlet of the injection channel (48) opens into the third part of the mould, and the plastic material flows from the third part of the mould (40) toward the first and second parts (42, 44).

10. Method according to claim 9, wherein a unique injection channel (48) is provided.

11. Method according to claim 9 or claim 10, wherein the third part (46) of the mould comprises a first straight section (52) connected to the first part, a second straight section (54) connected to the second part, wherein the first and second straight sections (52, 54) are connected to each other through a third section, the third section having a U-shaped cross-section.

12. Method according to claim 11, wherein the third section comprises an interface body provided between the first and second straight section, and an injection body, which extend perpendicularly to the interface body, and wherein the outlet of the injection channel opens into the injection body.

13. Method according to claim 12, wherein the injection body and the interface body both have a U-shaped cross-section.

14. Method according to claim 12 or 13, wherein the distance between the injection body and the first part is at least 2 millimetres.
